# EUROPÄISCHE PATENTSCHRIFT

(11) **EP 1 103 711 B1**
(45) Veröffentlichungstag und Bekanntmachung des Hinweises auf die Patenterteilung: **10.08.2005**
(21) Anmeldenummer: 00124301.3
(22) Anmeldetag: 15.11.2000
(51) Int. Cl.: F02D 41/38, F02D 41/40, F02D 21/08, F02D 41/14

(54) **Verfahren und Vorrichtung zur Regelung eines Drehmomentes von Dieselmotoren**
Method and apparatus for controlling the torque of a diesel engine
Méthode et dispositif pour la commande du couple d'un moteur diesel

(30) Priorität: 27.11.1999 DE 19957200
(43) Veröffentlichungstag der Anmeldung: 30.05.2001
(73) Patentinhaber: Volkswagen Aktiengesellschaft, 38436 Wolfsburg (DE)
(72) Erfinder: Pott, Ekkehard, Dr., 38518 Gifhorn (DE)
(74) Vertreter: Reinstädler, Diane

(56) Entgegenhaltungen:
- DE-A- 19 631 986
- US-A- 5 666 917
- US-B1- 6 205 973

## Beschreibung

Die Erfindung betrifft ein Verfahren und eine Vorrichtung zur Regelung eines Drehmomentes von Dieselmotoren entsprechend einem vorgegebenen Soll-Drehmoment mit den in den Oberbegriffen der unabhängigen Ansprüche genannten Merkmalen.

Moderne Dieselmotoren, insbesondere Turbo-Dieselmotoren, werden üblicherweise mittels eines Motorsteuergerätes in ihrem Betrieb geregelt. Nach Möglichkeit sollen dabei die Leistungsanforderungen durch zugeordnete Aggregate oder infolge bestimmter Fahrsituationen (zum Beispiel Bergauffahrt) kompensiert werden, so daß insgesamt eine Momentenneutralität dieser Ereignisse sichergestellt ist. Ändert sich demnach ein Betriebsparameter des Dieselmotors (Störgröße), so werden in dem Motorsteuergerät hinterlegte Prozeduren initiiert, die insgesamt das vorgegebene Soll-Drehmoment aufrechterhalten sollen. Durch das Motorsteuergerät erfolgt dazu eine Vorgabe geeigneter Stellgrößen für dem Dieselmotor zugeordnete Stellglieder, wie ein Einspritzsystem, eine Abgasrückführeinrichtung oder ein Lader.

Ferner wird ein während der Verbrennung entstehendes Abgas des Dieselmotors zur Reinigung durch eine Abgasreinigungsanlage geleitet. Die Abgasreinigungsanlage umfaßt Partikelfilter und/oder Katalysatoren, wie beispielsweise Oxidationskatalysatoren, HC-Denox-Katalysatoren und NOₓ-Speicherkatalysatoren. Eine hinreichend hohe Umsetzung der im Abgas enthaltenen Schadstoffe kann nur gewährleistet werden, wenn die Temperaturen mindestens eine notwendige Aktivitätstemperatur übersteigen. Diese liegt üblicherweise bei Temperaturen von über 200 °C, so daß insbesondere in Niederlastbereichen Heizmaßnahmen ergriffen werden müssen. Als Heizmaßnahmen kommen dabei beispielsweise in Frage eine Änderung einer Drosselklappenstellung, einer Abgasrückführrate (EGR-Rate) und/oder eines Ladedrucks bei aufgeladenen Motoren. Die durch derartige Eingriffe resultierenden Momentenänderungen werden nach den herkömmlichen Verfahren nur unzureichend oder gar nicht erfaßt und können damit zu einer unerwünschten Änderung des Fahrverhaltens führen.

Aufgabe der vorliegenden Vorrichtung und des vorliegenden Verfahrens ist es, eine Momentenänderung infolge von Störgrößen, die aus einer Änderung eines Luftmassenstromes der Abgasrückführeinrichtung und/oder einer Ladungswechselarbeit und/oder einer Nacheinspritzung durch das Einspritzsystem resultieren, hinsichtlich des einzustellenden Soll-Drehmomentes zu korrigieren. Die Regelung muss zudem derart erfolgen, dass insbesondere die bei der Heizmaßnahme betätigten Stellglieder außer Betracht gelassen werden.

Erfindungsgemäß wird diese Aufgabe durch ein Verfahren und eine Vorrichtung mit den in den unabhängigen Ansprüchen genannten Merkmalen gelöst. Nach dem Verfahren ist vorgesehen, dass
(a) die Störgrößen einen Luftmassenstrom einer Abgasrückführeinrichtung (EGR-Anlage) und/oder eine Ladungswechselarbeit und/oder eine Nacheinspritzung von Kraftstoff durch ein Einspritzsystem umfassen und für jede dieser Störgrößen eine Momentenänderung errechnet wird,
(b) aus einer Summe der einzelnen Momentenänderungen eine korrigierte Momentenänderunggebildet wird und
(c) in Abhängigkeit von der korrigierten Momentenänderung eine Änderung einer Haupteinspritzmenge ermittelt wird und die Änderung der Haupteinspritzmenge zur Vorgabe einer korrigierten Haupteinspritzmenge für das Einspritzsystem dient, wobei mit der korrigierten Haupteinspritzmenge das Soll-Drehmoment des Dieselmotors eingestellt werden kann

Für die Vorrichtung sind Mittel vorgesehen, mit denen das geschilderte Verfahren geregelt werden kann. Vorzugsweise umfassen diese Mittel ein Steuergerät, in dem eine Prozedur zur Regelung des Drehmomentes hinterlegt ist. Das Steuergerät kann in besonders vorteilhafter Ausgestaltung der Erfindung in ein bereits vorhandenes Motorsteuergerät integriert werden.

Es hat sich weiterhin als besonders vorteilhaft erwiesen, vorgenanntes Verfahren für den Fall einzuleiten, dass die Änderung infolge einer Heizmaßnahme für eine dem Dieselmotor nachgeordnete Abgasreinigungsanlage eintritt. Damit ist es erstmalig möglich, die Momentenneutralität auch in dieser speziellen Fahrsituation sicherzustellen, ohne die Heizmaßnahme selbst zu beeinflussen. Selbstverständlich lassen sich die geschilderten Maßnahmen auch darüber hinaus zur Bereitstellung optimaler Arbeits-Randbedingungen für den Dieselmotor nutzen.

Verfahrensschritte zur Einstellung vorgenannter Parameter sind aus dem Stand der Technik bekannt und werden daher an dieser Stelle nicht näher erläutert.

Ferner ist vorteilhaft, die Momentenänderung aufgrund der Ladungswechselarbeit über ein Kennfeld, das die Tastverhältnisse der Drosselklappenstellung und der EGR-Rate beinhaltet, zu bestimmen. Eine besonders exakte Bestimmung dieser Momentenänderung läßt sich durch Berücksichtigung weiterer Korrekturfaktoren, die in Abhängigkeit von einer Motordrehzahl, einer Einspritzmenge, eines Luftmassenstroms und des Ladedruckes ermittelt werden, durchführen.

Weiterhin ist vorteilhaft, die Momentenänderung, die infolge einer Änderung der Nacheinspritzung auftritt, aus einem Kennfeld für eine Dauer und einen Zeitpunkt der Nacheinspritzung auszulesen. Auch hier kann in besonders vorteilhafter Weise eine noch genauere Bestimmung der Momentenänderung durch Aufnahme eines Korrekturfaktors für die Motordrehzahl und/oder eines Verdampfungsanteils sichergestellt werden.

Als vorteilhaft hat sich ferner folgende Vorgehensweise bei der Bestimmung der Momentenänderung aufgrund einer Änderung des Luftmassenstroms der Abgasrückführeinrichtung ergeben. Zunächst wird ein Verbrennungsverschleppungsfaktor ermittelt und mit dem in bekannter Weise vorgegebenen Soll-Drehmoment des Dieselmotors, beispielsweise über ein Kennfeld, abgestimmt. Der Verbrennungsverschleppungsfaktor wiederum läßt sich mit Hilfe einer Kennlinie für einen EGR-Anteil an einem Gesamtluftmassenstrom bestimmen, wobei sich letzterer durch Interpolation, ausgehend von ausgewählten Drosselklappenstellungen zugeordneter Luftmassenströme, unter Berücksichtigung eines Korrekturfaktors für den Ladedruck ermitteln läßt.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine Prinzipdarstellung eines Dieselmotors mit einer Abgasrückführeinrichtung, einem Lader und einem Einspritzsystem;
- Figuren 2 und 3: ein schematisches Ablaufdiagramm bzw. ein schematisches Prinzipschaltbild zur Regelung eines Drehmomentes von Dieselmotoren;
- Figur 4: ein schematisches Prinzipschaltbild zur Ermittlung einer Momentenänderung aufgrund einer Änderung einer Ladungswechselarbeit;
- Figur 5: ein schematisches Prinzipschaltbild zur Ermittlung einer Momentenänderung aufgrund einer Nacheinspritzung und
- Figur 6: ein schematisches Prinzipschaltbild zur Ermittlung einer Momentenänderung aufgrund einer Änderung einer EGR-Rate.

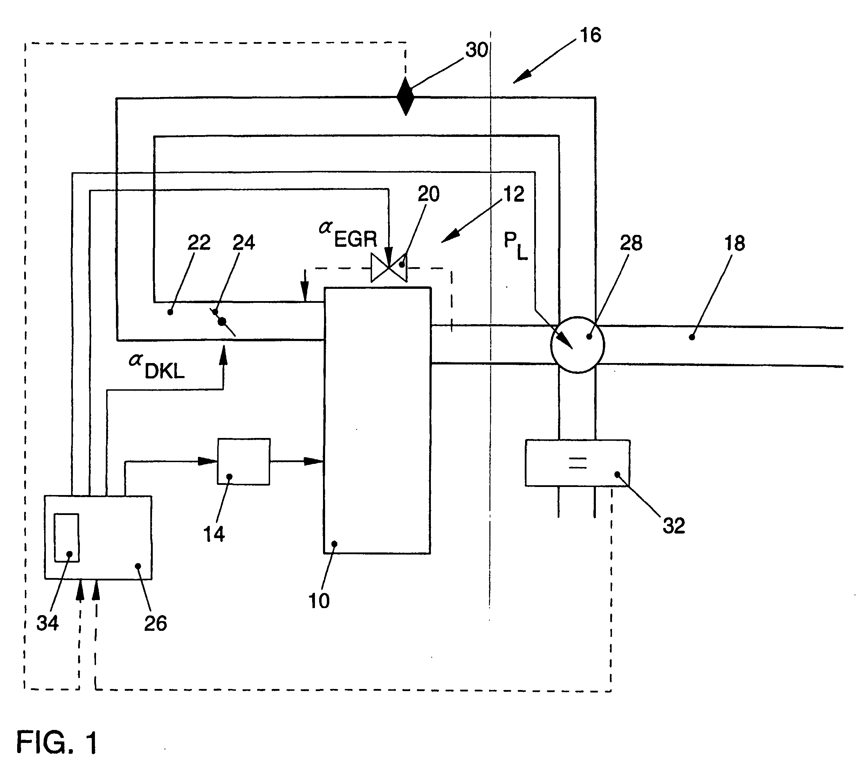

Die Figur 1 zeigt eine Prinzipdarstellung eines Dieselmotors 10 mit einer Abgasrückführeinrichtung (EGR-Anlage 12), einem Einspritzsystem 14 und einem Lader 16. Ein während eines Verbrennungsvorgangs in dem Dieselmotor 10 entstehendes Abgas wird durch einen Abgaskanal 18 abgeleitet. In dem Abgaskanal 18 kann eine hier nicht dargestellte Abgasreinigungsanlage vorgesehen sein, die insbesondere Katalysatoren zur Umsetzung von Schadstoffen beinhaltet. Zum optimalen Betrieb einer solchen Abgasreinigungsanlage muß im allgemeinen eine Mindesttemperatur überschritten werden, so daß motorseitig Heizmaßnahmen ergriffen werden müssen. Diese können in bekannter Weise mit Hilfe der EGR-Anlage 12, des Einspritzsystems 14 und des Laders 16 verwirklicht werden. Eine Kompensation der infolge der Heizmaßnahmen auftretenden Momentenänderungen, ohne die Heizmaßnahmen dabei zu beeinflussen, ist Gegenstand der vorliegenden Erfindung.

Die EGR-Anlage 12 umfaßt als Stellglieder ein EGR-Ventil 20 sowie eine in einem Ansaugrohr 22 angeordnete Drosselklappe 24. Über ein Motorsteuergerät 26 kann in bekannter Weise den Stellgliedern 20, 24 ein Drosselklappenwinkel α_{DKL} beziehungsweise ein Öffnungswinkel α_{EGR} vorgegeben werden.

Der Lader 16 umfaßt das eigentliche Ladegerät 28, beispielsweise einen Turbolader mit Turbine und Verdichter, als auch einen zur Regelung des Ladegerätes 28 genutzten Ladedruckfühler 30. Über das Steuergerät 26 wird dem Ladegerät 28 ein Ladedruck P_{L} vorgegeben. Ferner kann durch einen Luftmassenmesser 32 ein Luftmassenstrom M_{L} bestimmt werden und in das Steuergerät 26 eingelesen werden.

Das Einspritzsystem 14 dient im allgemeinen zur Einstellung einer Einspritzmenge M_{E}, eines Zündwinkels, einer Einspritzzeit und einer Dauer und einem Zeitpunkt einer Nacheinspritzung NE. Die notwendigen Funktionsmerkmale beziehungsweise

Führt beispielsweise eine Heizmaßnahme, die mit Hilfe der vorgenannten Mittel 12, 14, 16 durchgeführt wird, zu einer Änderung der Betriebsparameter des Dieselmotors 10, so ist damit im allgemeinen ebenfalls eine Momentenänderung verbunden. Bei dem vorliegenden Verfahren werden die Änderungen von wenigstens einem Betriebsparameter (Störgröße), verursacht durch die Mittel 12, 14, 16, erfasst und nach Möglichkeit derart kompensiert, dass eine Heizmaßnahme nicht unterbrochen wird.

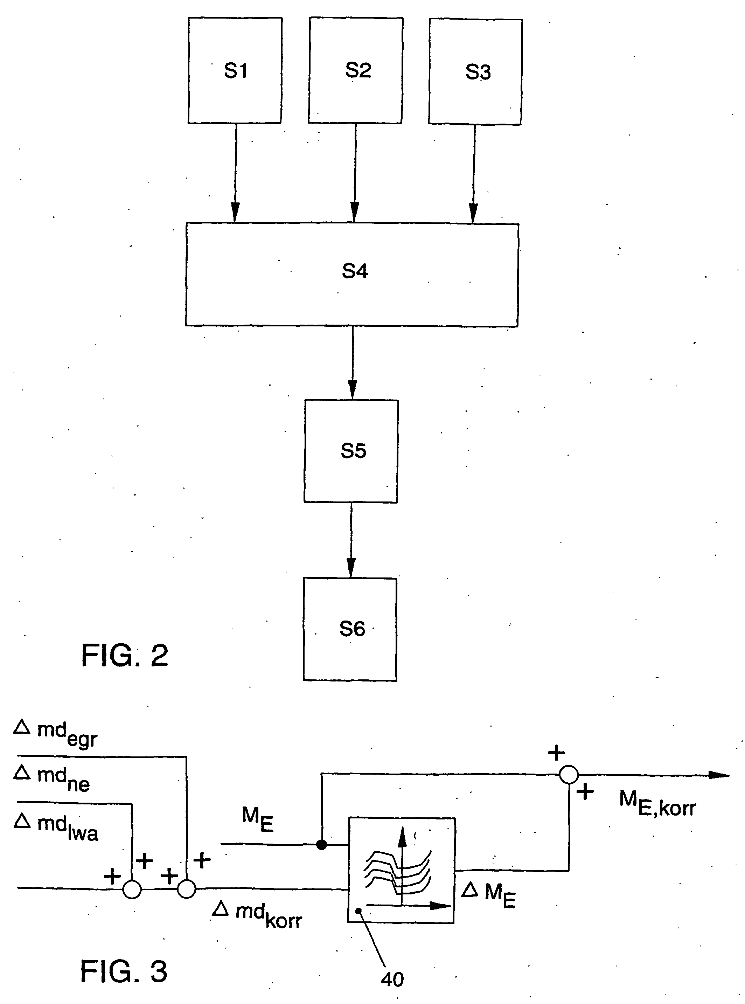

Die Figuren 2 und 3 zeigen in unterschiedlicher Darstellung den Ablauf des Verfahrens. Zunächst wird in einem Schritt S1 eine Momentenänderung Δmd_{egr} aufgrund einer Änderung eines Luftmassenstromes M_{L,egr} der EGR-Anlage 12, in einem Schritt S2 eine Momentenänderung Δmd_{Iwa} aufgrund einer Änderung einer Ladungswechselarbeit LWA des Laders 16 und eine Momentenänderung Δmdₙₑ für eine Änderung der Nacheinspritzung NE (Schritt S3) erfasst.

In einem Schritt S4 wird eine Summe der einzelnen Momentenänderungen Δmd_{egr}, Δmdₙₑ, Δmd_{Iwa} gebildet, die einer korrigierten Momentenänderung Δmdₖₒᵣᵣ entspricht. In Abhängigkeit von der korrigierten Momentenänderung Δmdₖₒᵣᵣ wird eine Änderung einer Haupteinspritzmenge ΔM_{E} bestimmt (Schritt S5). Dies kann beispielsweise, wie der Figur 3 zu entnehmen ist, mittels eines geeigneten Kennfeldes 40 erfolgen. Letztendlich lässt sich durch Addition der Änderung ΔM_{E} zu der aktuellen Haupteinspritzmenge M_{E} eine korrigierte Haupteinspritzmenge M_{E,korr} bestimmen (Schritt S6), bei der eine Einstellung eines Soll-Drehmomentes mdₛₒₗₗ des Dieselmotors 10 sichergestellt ist.

Die vorgenannte Verfahrensweise kann mit Hilfe eines Steuergerätes 34, in dem eine Prozedur zur Regelung des Drehmomentes des Dieselmotors 10 hinterlegt ist, durchgeführt werden. Das Steuergerät 34 kann Teil des Motorsteuergerätes 26 sein oder aber auch als selbständige Steuereinheit realisiert werden.

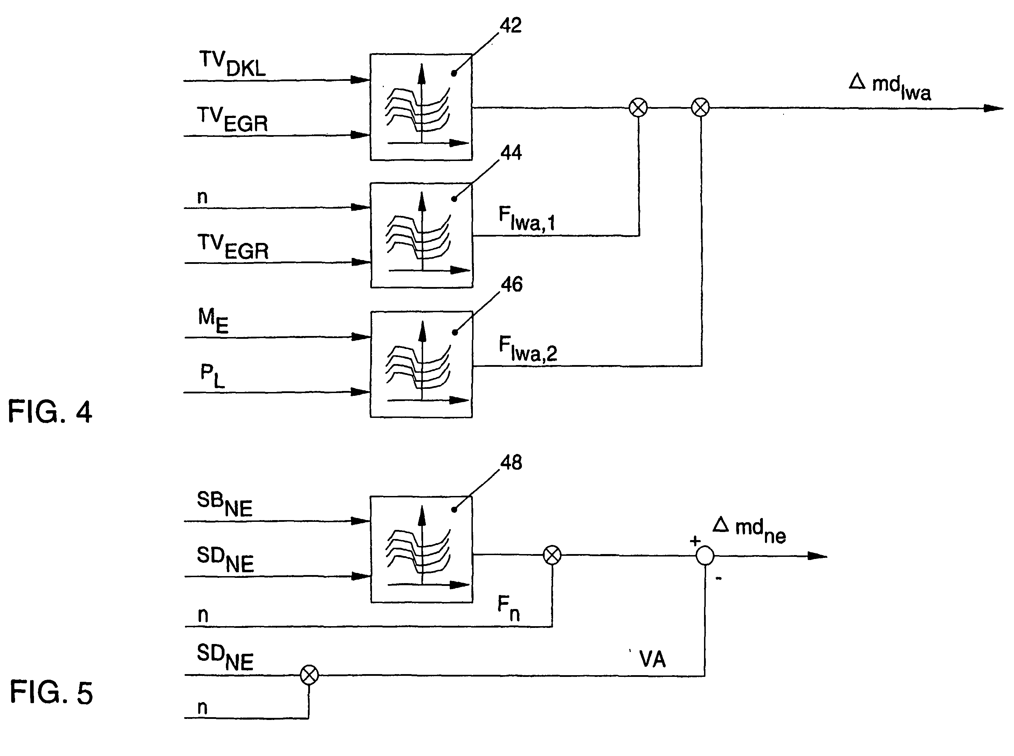

Der Figur 4 ist ein prinzipieller Ablauf zur Ermittlung der Momentenänderung Δmd_{Iwa} zu entnehmen. Prinzipiell lässt sich die Momentenänderung Δmd_{Iwa} bereits einem Kennfeld 42 für ein Tastverhältnis einer Drosselklappenstellung TV_{DKL} und einer EGR-Rate TV_{EGR} entnehmen. Es hat sich jedoch auch als vorteilhaft erwiesen, zusätzliche Korrekturen durchzuführen. Ein erster Korrekturfaktor F_{Iwa,1} kann aus einem Kennfeld 44 für eine Motordrehzahl n und die Einspritzmenge M_{E} bestimmt werden. Weiterhin kann ein zweiter Korrekturfaktor F_{Iwa,2} bei der Bestimmung der Momentenänderung Δmd_{Iwa} berücksichtigt werden. Der zweite Korrekturfaktor F_{Iwa,2} ist ebenfalls über ein Kennfeld 46 diesmal für den Luftmassenstrom M_{L} und den Ladedruck P_{L} bestimmbar, so dass letztendlich eine sehr exakte Ermittlung der Momentenänderung Δmd_{Iwa} ermöglicht wird.

Der Figur 5 ist ein prinzipieller Ablauf zur Ermittlung einer Momentenänderung Δmdₙₑ zu entnehmen. Auch hier lässt sich die Momentenänderung Δmdₙₑ bereits aus einem Kennfeld 48 für die Dauer SD_{NE} und den Zeitpunkt SB_{NE} der Nacheinspritzung NE auslesen. Eine Korrektur dieser Größe kann durch Multiplikation mit einem Korrekturfaktor Fₙ sowie durch Abzug eines Verdampfungsanteils VA erfolgen. Der Verdampfungsanteil VA repräsentiert die Verdampfungsarbeit des eingespritzten Kraftstoffs, und der Korrekturfaktor Fₙ beinhaltet den Einfluß der Motordrehzahl n.

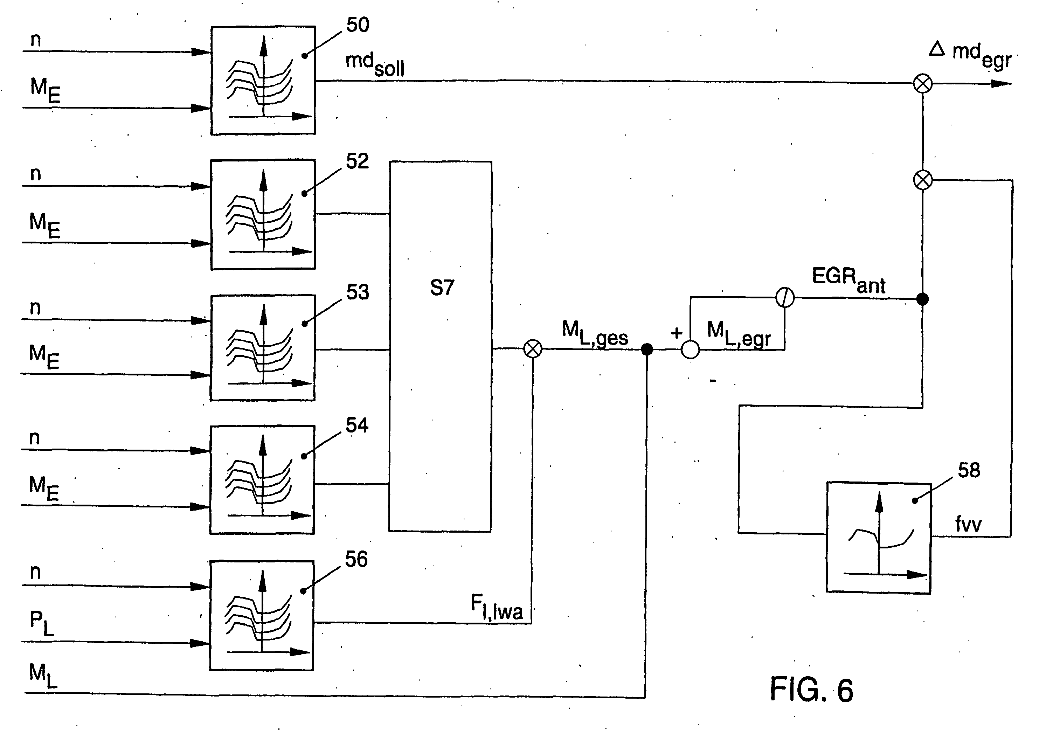

Die Figur 6 zeigt ein Prinzipschaltbild für die Ermittlung der Momentenänderung Δmd_{egr}. Zunächst werden für verschiedene Drosselklappenstellungen α_{DKL} Luftmassenströme ohne Abgasrückführung aufgenommen (Kennfelder 52, 53, 54). Durch Interpolations und anschließende Multiplikation mit einem Korrekturfaktor F_{I,lwa} für den Ladedruck P_{L} ohne Abgasrückführung ergibt sich hieraus ein Gesamtluftmassenstrom M_{L,ges}. Der Korrekturfaktor F_{I,lwa} selbst läßt sich aus einem Kennfeld 56 für die Motordrehzahl n und den Ladedruck P_{L} bestimmen. Durch Abgleich mit dem über den Luftmassenmesser 32 gemessenen Luftmassenstrom M_{L} kann hieraus ein Luftmassenstrom M_{L,egr} der EGR-Anlage 12 beziehungsweise ein EGR-Anteil EGRₐₙₜ am Gesamtluftmassenstrom M_{L,ges} berechnet werden. Aus einer Kennlinie 58 für den Anteil EGRₐₙₜ wird anschließend ein Verbrennungsverschleppungsfaktor fvv zugeordnet, der multiplikativ mit dem aus einem Kennfeld 50 bestimmten Sollmoment mdₛₒₗₗ die Momentenänderung als Folge der EGR Δmd_{egr} beschreibt.

## Patentansprüche

1. Verfahren zur Regelung eines Drehmomentes von Dieselmotoren(10) entsprechend einem vorgegebenen Soll-Drehmoment (mdₛₒₗₗ), bei dem über ein Motorsteuergerät (26) eine Momentenänderung infolge von Störgrößen, die in Form einer Änderung von wenigstens einem Betriebsparameter des Dieselmotors (10) auftreten, erfasst wird und die Momentenänderung durch Vorgabe geeigneter Stellgrößen für dem Dieselmotor (10) zugeordnete Stellglieder kompensiert wird, **dadurch gekennzeichnet, dass**
(a) die Störgrößen einen Luftmassenstrom (M_{L,egr}) einer Abgasrückführeinrichtung (12) und/oder eine Ladungswechselarbeit (Iwa) und/oder eine Nacheinspritzung (NE) von Kraftstoff durch ein Einspritzsystem (14) umfassen und für jede dieser Störgrößen eine Momentenänderung (Δmd_{egr}, Δmd_{lwa}, Δmdₙₑ) berechnet wird,
(b) aus einer Summe der einzelnen Momentenänderungen (Δmd_{egr}, Δmd_{lwa}, Δmdₙₑ) eine korrigierte Momentenänderung (Δmdₖₒᵣᵣ) gebildet wird und
(c) in Abhängigkeit von der korrigierten Momentenänderung (Δmdₖₒᵣᵣ) eine Änderung einer Haupteinspritzmenge (ΔM_{E}) ermittelt wird und die Änderung der Haupteinspritzmenge (ΔM_{E}) zur Vorgabe einer korrigierten Haupteinspritzmenge (M_{E,korr}) für das Einspritzsystem (14) dient, wobei mit der korrigierten Haupteinspritzmenge (M_{E,korr}) das Soll-Drehmoment (mdₛₒₗₗ) des Dieselmotors (10) eingestellt werden kann.

2. Verfahren nach Anspruch 1, **dadurch gekennzeichnet, dass** die Änderung der Störgrößen infolge einer Heizmaßnahme für eine dem Dieselmotor (10) nachgeordnete Abgasreinigungsanlage eintritt.

3. Verfahren nach den Ansprüchen 1 oder 2; **dadurch gekennzeichnet, dass** die ladungswechselabhängige Momentenänderung (Δmd_{Iwa}) aus einem Kennfeld (42) für ein Tastverhältnis einer Drosselklappenstellung (TV_{DKL}) und einer EGR-Rate (TV_{EGR}) ausgelesen wird.

4. Verfahren nach Anspruch 3, **dadurch gekennzeichnet, dass** bei der Bestimmung der ladungswechselabhängigen Momentenänderung (Δmd_{Iwa}) zusätzlich ein Korrekturfaktor (F_{Iwa,1}) einfließt, der über ein Kennfeld (44) für eine Motordrehzahl (n) und eine Einspritzmenge (M_{E}) bestimmt wird.

5. Verfahren nach Anspruch 3 oder 4, **dadurch gekennzeichnet, dass** bei der Bestimmung der ladungswechselabhängigen Momentenänderung (Δmd_{Iwa}) zusätzlich ein Korrekturfaktor (F_{Iwa,2}) einfließt, der über ein Kennfeld (46) für einen Luftmassenstrom (M_{L}) und einen Ladedruck (P_{L}) bestimmt wird.

6. Verfahren nach einem der vorhergehenden Ansprüche, **dadurch gekennzeichnet, dass** die nacheinspritzungsabhängige Momentenänderung (Δmdₙₑ) aus einem Kennfeld (48) für eine Dauer (SD_{NE}) und einen Zeitpunkt (SB_{NE}) der Nacheinspritzung ausgelesen wird.

7. Verfahren nach Anspruch 6, **dadurch gekennzeichnet, dass** bei der Bestimmung der nacheinspritzungsabhängigen Momentenänderung (Δmdₙₑ) zusätzlich ein Korrekturfaktor (Fₙ) für die Motordrehzahl (n) einfließt.

8. Verfahren nach Anspruch 6 oder 7, **dadurch gekennzeichnet, dass** bei der Bestimmung der nacheinspritzungsabhängigen Momentenänderung (Δmdₙₑ) zusätzlich ein Verdampfungsanteil (VA) des in der Nacheinspritzung eingespritzten Kraftstoffs berücksichtigt wird.

9. Verfahren nach einem der vorhergehenden Ansprüche, **dadurch gekennzeichnet, dass** die abgasrückführungsabhängige Momentenänderung (Δmd_{egr}) in Abhängigkeit von einem Verbrennungsverschleppungsfaktor (fvv) und dem Soll-Drehmoment (mdₛₒₗₗ) bestimmt wird.

10. Verfahren nach Anspruch 9, **dadurch gekennzeichnet, dass** der Verbrennungsverschleppungsfaktor (fvv) anhand einer Kennlinie (58) für einen EGR-Anteil (egrₐₙₜ) an einem Gesamt-Luftmassenstrom (M_{L,ges}) bestimmt wird.

11. Verfahren nach Anspruch 10, **dadurch gekennzeichnet, dass** zur Bestimmung des Gesamt-Luftmassenstroms (M_{L,ges}) zunächst anhand einer Drosselklappenstellung (α_{DKL}) ein Luftmassenstrom ohne Abgasrückführung (EGR) ermittelt wird und dieser mit einem Korrekturfaktor (F_{L,lwa}) für den Ladedruck (P_{L}) multipliziert wird.

12. Vorrichtung zur Regelung eines Drehmomentes von Dieselmotoren (10) entsprechend einem vorgegebenen Soll-Drehmoment (mdₛₒₗₗ), bei der über ein Motorsteuergerät (26) eine Momentenänderung infolge von Störgrößen, die in Form einer Änderung von wenigstens einem Betriebsparameter des Dieselmotors (10) auftreten, erfasst wird und die Momentenänderung durch Vorgabe geeigneter Stellgrößen für den Dieselmotor (10) zugeordnete Stellglieder kompensiert wird, **dadurch gekennzeichnet, dass** Mittel vorgesehen sind, mit denen
(a) Störgrößen, die einen Luftmassenstrom (M_{L,egr}) einer Abgasrückführeinrichtung (12) und/oder eine Ladungswechselarbeit (Iwa) und/oder eine Nacheinspritzung (NE) von Kraftstoff durch ein Einspritzsystem (14) umfassen, erfaßt werden und für jede dieser Störgrößen eine Momentenänderung (Δmd_{egr}, Δmdₙₑ, Δmd_{Iwa}) berechnet werden,
(b) aus einer Summe der einzelnen Momentenänderungen (Δmd_{egr}, Δmdₙₑ, Δmd_{Iwa}) eine korrigierte Momentenänderung (Δmdₖₒᵣᵣ) gebildet wird und
(c) in Abhängigkeit von der korrigierten Momentenänderung (Δmdₖₒᵣᵣ) eine Änderung einer Haupteinspritzmenge (ΔM_{E}) ermittelt wird und die Änderung der Haupteinspritzmenge (ΔM_{E}) zur Vorgabe einer korrigierten Haupteinspritzmenge (M_{E,korr}) für das Einspritzsystem (14) dient, wobei mit der korrigierten Haupteinspritzmenge (M_{E,korr}) das Soll-Drehmoment (mdₛₒₗₗ) des Dieselmotors (10) eingestellt werden kann.

13. Vorrichtung nach Anspruch 12, **dadurch gekennzeichnet, dass** die Mittel ein Steuergerät (34) umfassen, in dem eine Prozedur zur Regelung des Drehmomentes hinterlegt ist.

14. Vorrichtung nach Anspruch 13, **dadurch gekennzeichnet, dass** das Steuergerät (34) Teil des Motorsteuergerätes (26) ist.

## Claims

1. Method for regulating a torque of diesel engines (10) corresponding to a predetermined set torque (mdₛₒₗₗ), wherein a change in torque resulting from interference parameters, which occur in the form of a change of at least one operating parameter of the diesel engine (10), is registered via an engine-control device (26), and the change in torque is compensated by specifying appropriate adjustment parameters for adjustment elements allocated to the diesel engine (10), **characterised in that**
a) the interference parameters comprise a mass-flow of air (M_{L,egr}) of an exhaust-gas recycling system (12) and/or a charge changing work (lwa) and/or a post-injection (NE) of fuel through an injection system (14), and that a torque change (Δmd_{egr}, Δmd_{lwa}, Δmdₙₑ) is calculated for each of these interference parameters;
b) a corrected torque change (Δmdₖₒᵣᵣ) is formed from a sum of the individual torque changes (Δmd_{egr}, Δmd_{lwa}, Δmdₙₑ); and
c) dependent upon the corrected torque change (Δmdₖₒᵣᵣ), a change in the main injection quantity (ΔM_{E}) is determined, and that the change of the main injection quantity (ΔM_{E}) is used to specify a corrected main injection quantity (M_{E,korr}) for the injection system (14), wherein the set torque (mdₛₒₗₗ) of the diesel engine (10) can be adjusted with the corrected main injection quantity (M_{E,korr}).

2. Method according to claim 1, **characterised in that** the change of the interference parameters occurs as a result of a heating measure for an exhaust-gas cleaning system connected downstream of the diesel engine (10).

3. Method according to claims 1 or 2, **characterised in that** the charge-changing-work-dependent torque change (Δmd_{lwa}) is read out from an engine-characteristic map (42) for a duty factor of a throttle valve position (TV_{DKL}) and an exhaust-gas recycling rate (TV_{EGR}).

4. Method according to claim 3, **characterised in that** in determining the charge-changing-work-dependent torque change (Δmd_{lwa}), an additional correction factor (F_{lwa,1}) is used, which is determined via an engine-characteristic map (44) for an engine speed (n) and an injection quantity (M_{E}).

5. Method according to claim 3 or 4, **characterised in that** in determining the charge-changing-work-dependent torque change (Δmd_{lwa}), an additional correction factor (F_{lwa,2}) is used, which is determined via an engine-characteristic map (46) for a mass-flow of air (M_{L}) and a boost pressure (P_{L}).

6. Method according to any one of the preceding claims, **characterised in that** the post-injection-dependent torque change (Δmdₙₑ) is read out from an engine-characteristic map (48) for a duration (SD_{NE}) and a point in time (SB_{NE}) of the post-injection.

7. Method according to claim 6, **characterised in that** in determining the post-injection-dependent torque change (Δmdₙₑ), an additional correction factor (Fₙ) for the engine speed (n) is used.

8. Method according to claim 6 or 7, **characterised in that** in determining the post-injection-dependent torque change (Δmdₙₑ), an evaporation content (V_{A}) of the fuel injected in the post-injection is additionally taken into consideration.

9. Method according to any one of the preceding claims, **characterised in that** the exhaust-gas-recycling-dependent torque change (Δmd_{egr}) is determined in dependence upon a combustion carry-over factor (fvv) and the set torque (mdₛₒₗₗ).

10. Method according to claim 9, **characterised in that** the combustion carry-over factor (fvv) is determined on the basis of a characteristic curve (58) for an exhaust-gas-recycling-portion (egrₐₙₜ) in a total mass-flow of air (M_{L,ges}).

11. Method according to claim 10, **characterised in that** in determining the total mass-flow of air (M_{L,ges}), a mass flow of air without exhaust-gas recycling (EGR) is initially determined on the basis of a throttle-valve position (α_{DKL}), and that this is multiplied by a correction factor (F_{L,lwa}) for the boost pressure (P_{L}).

12. Device for regulating a torque of diesel engines (10) corresponding to a predetermined set torque (mdₛₒₗₗ), wherein a change in torque resulting from interference parameters, which occur in the form of a change of at least one operating parameter of the diesel engine (10), is registered via an engine-control device (26), and wherein the change in torque is compensated by specifying appropriate adjustment parameters for adjustment elements allocated to the diesel engine (10), **characterised in that** means are provided, with which
a) interference parameters, which comprise a mass-flow of air (M_{L,egr}) of an exhaust-gas recycling system (12) and/or a charge changing work (Iwa) and/or a post-injection (NE) of fuel through an injection system (14), are registered, and a torque change (Δmd_{egr}, Δmd_{lwa}, Δmdₙₑ) is calculated for each of these interference parameters,
b) a corrected torque change (Δmdₖₒᵣᵣ) is formed from a sum of the individual torque changes (Δmd_{egr}, Δmd_{lwa}, Δmdₙₑ), and
c) dependent upon the corrected torque change (Δmdₖₒᵣᵣ), a change in a main injection quantity (ΔM_{E}) is determined, and that the change of the main injection quantity (ΔM_{E}) is used to specify a corrected main injection quantity (M_{E,korr}) for the injection system (14), wherein the set torque (mdₛₒₗₗ) of the diesel engine (10) can be adjusted with the corrected main injection quantity (M_{E,korr}).

13. Device according to claim 12, **characterised in that** the means comprise a control device (34), in which a procedure for the regulation of the torque is stored.

14. Device according to claim 13, **characterised in that** the control device (34) is a component of the engine-control device (26).

## Revendications

1. Procédé de réglage d'un couple de moteurs diesel (10) conformément à un couple de consigne prescrit (mdₛₒₗₗ), dans lequel, par l'intermédiaire d'un appareil de commande de moteur (26), une modification de couple est détectée par suite de grandeurs perturbatrices qui surviennent sous forme de modification d'au moins un paramètre de fonctionnement du moteur diesel (10), puis la modification de couple est compensée par la production de grandeurs réglantes appropriées destinées à des dispositifs de réglage associés au moteur diesel (10), **caractérisé en ce que** :
(a) les grandeurs perturbatrices comprennent un débit massique d'air (M_{L,egr}) d'un dispositif de recyclage des gaz d'échappement (12) et/ou un travail de changement de charge (Iwa) et/ou une injection complémentaire (NE) de carburant par un système d'injection (14) et une modification de moment (Δmd_{egr}, Δmd_{Iwa}, Δmdₙₑ) est calculée pour chacune de ces grandeurs perturbatrices,
(b) une modification de moment corrigée (Δmdₖₒᵣᵣ) est formée à partir d'une somme des différentes modifications de moment (Δmd_{egr}, Δmd_{Iwa}, Δmdₙₑ), et
(c) une modification d'une quantité injectée principale (ΔM_{E}) est calculée en fonction de la modification de moment corrigée (Δmdₖₒᵣᵣ) et la modification de la quantité injectée principale (ΔM_{E}) sert à indiquer une quantité injectée principale corrigée (M_{E,korr}) au système d'injection (14), le couple de consigne (mdₛₒₗₗ) du moteur diesel (10) pouvant être atteint grâce à la quantité injectée principale corrigée (M_{E,korr}).

2. Procédé selon la revendication 1, **caractérisé en ce que** la modification des grandeurs perturbatrices se produit par suite d'une opération de chauffage pour un dispositif d'épuration des gaz d'échappement disposé en aval du moteur diesel (10).

3. Procédé selon les revendications 1 ou 2, **caractérisé en ce que** la modification de couple fonction du changement de charge (Δmd_{Iwa}) est extraite d'un champ caractéristique (42) pour un rapport d'utilisation d'une position de clapet d'étranglement (TV_{DKL}) et d'un taux de recyclage des gaz d'échappement (TV_{EGR}).

4. Procédé selon la revendication 3, **caractérisé en ce qu'**un coefficient de correction (F_{Iwa,1}), qui est déterminé par l'intermédiaire d'un champ caractéristique (44) pour un régime moteur (n) et une quantité injectée (M_{E}), intervient en plus lors de la détermination de la modification de couple fonction du changement de charge (Δmd_{Iwa}).

5. Procédé selon la revendication 3 ou 4, **caractérisé en ce qu'**un coefficient de correction (F_{Iwa,2}), qui est déterminé par l'intermédiaire d'un champ caractéristique (46) pour un débit massique d'air (M_{L}) et une pression d'admission (P_{L}), intervient en plus lors de la détermination de la modification de couple fonction du changement de charge (Δmd_{Iwa}).

6. Procédé selon l'une des revendications précédentes, **caractérisé en ce que** la modification de moment fonction de l'injection complémentaire (Δmdₙₑ) est extraite d'un champ caractéristique (48) pour une durée (SD_{NE}) et un instant (SB_{NE}) de l'injection complémentaire.

7. Procédé selon la revendication 6, **caractérisé en ce qu'**un coefficient de correction (Fₙ) pour le régime moteur (n) intervient en plus lors de la détermination de la modification de couple fonction de l'injection complémentaire (Δmdₙₑ).

8. Procédé selon la revendication 6 ou 7, **caractérisé en ce qu'**une part de vaporisation (VA) du carburant injecté dans l'injection complémentaire est, en plus, pris en considération lors de la détermination de la modification de couple fonction de l'injection complémentaire (Δmdₙₑ).

9. Procédé selon l'une des revendications précédentes, **caractérisé en ce que** la modification de couple fonction du recyclage des gaz d'échappement (Δmd_{egr}) est déterminée en fonction d'un facteur de retardement de combustion (fvv) et en fonction du couple de consigne (mdₛₒₗₗ).

10. Procédé selon la revendication 9, **caractérisé en ce que** le facteur de retardement de combustion (fvv) est déterminé au moyen d'une courbe caractéristique (58) pour une part de recyclage des gaz d'échappement (EGRₐₙₜ) dans un débit massique total d'air (M_{L,ges}).

11. Procédé selon la revendication 10, **caractérisé en ce que**, pour déterminer le débit massique total d'air (M_{L,ges}), on calcule tout d'abord un débit massique d'air sans recyclage des gaz d'échappement (EGR) avec une position de clapet d'étranglement (α_{DKL}) puis on multiplie ce débit par un coefficient de correction (F_{L,Iwa}) relatif à la pression d'admission (P_{L}).

12. Dispositif de réglage d'un couple de moteurs diesel (10) conformément à un couple de consigne prescrit (mdₛₒₗₗ), dans lequel, par l'intermédiaire d'un appareil de commande de moteur (26), une modification de couple est détectée par suite de grandeurs perturbatrices qui surviennent sous forme de modification d'au moins un paramètre de fonctionnement du moteur diesel (10) puis la modification de couple est compensée en indiquant des grandeurs réglantes appropriées destinées à des dispositifs de réglage associés au moteur diesel (10), **caractérisé en ce qu'il** est prévu des moyens avec lesquels :
(a) des grandeurs perturbatrices comprenant un débit massique d'air (M_{L,egr}) d'un dispositif de recyclage des gaz d'échappement (12) et/ou un travail de changement de charge (Iwa) et/ou une injection complémentaire (NE) de carburant par un système d'injection (14) sont détectées et une modification de couple (Δmd_{egr}, Δmdₙₑ, Δmd_{Iwa}) est calculée pour chacune de ces grandeurs perturbatrices,
(b) une modification de couple corrigée (Δmdₖₒᵣᵣ) est formée à partir d'une somme des différentes modifications de couple (Δmd_{egr}, Δmdₙₑ, Δmd_{Iwa}), et
(c) une modification d'une quantité injectée principale (ΔM_{E}) est élaborée en fonction de la modification de couple corrigée (Δmdₖₒᵣᵣ) et la modification de la quantité injectée principale (ΔM_{E}) sert à élaborer une quantité injectée principale corrigée (M_{E,korr}) pour le système d'injection (14), le couple de consigne (mdₛₒₗₗ) du moteur diesel (10) pouvant être atteint grâce à la quantité injectée principale corrigée (M_{E,korr}).

13. Dispositif selon la revendication 12, **caractérisé en ce que** les moyens comprennent un appareil de commande (34) dans lequel une procédure de réglage du couple est déposée.

14. Dispositif selon la revendication 13, **caractérisé en ce que** l'appareil de commande (34) fait partie de l'appareil de commande de moteur (26).
